# FASCICULE DE BREVET EUROPEEN

(11) **EP 2 939 179 B1**
(45) Date de publication et mention de la délivrance du brevet: **25.01.2017**
(21) Numéro de dépôt: 13814897.8
(22) Date de dépôt: 19.12.2013
(51) Int. Cl.: G06K 9/00

(54) **PROCÉDÉ DE SEGMENTATION D'UNE IMAGE D'UN OEIL ET DISPOSITIF ASSOCIÉ**
VERFAHREN UND VORRICHTUNG ZUR SEGMENTIERUNG DES BILD EINES AUGES
METHOD AND APPARATUS FOR THE SEGMENTATION OF THE IMAGE OF AN EYE

(30) Priorité: 28.12.2012 FR 1203621
(43) Date de publication de la demande: 04.11.2015
(73) Titulaire: Thales, 92200 Neuilly-sur-Seine (FR)
(72) Inventeur: LEFEVRE, Thierry, 92622 Gennevilliers Cedex (FR); BELARDI, Stéphane, 92622 Gennevilliers Cedex (FR); LAMPERIERE, Nadège, 92622 Gennevilliers Cedex (FR); DORIZZI, Bernadette, 91011 Evry Cedex (FR); GARCIA, Sonia, 91011 Evry Cedex (FR)
(74) Mandataire: Lavoix
(86) Numéro de dépôt international: PCT/EP2013/077332
(87) Numéro de publication internationale: WO 2014/102132

(56) Documents cités:
- NATHAN KALKA ET AL: "An automated method for predicting iris segmentation failures", BIOMETRICS: THEORY, APPLICATIONS, AND SYSTEMS, 2009. BTAS '09. IEEE 3RD INTERNATIONAL CONFERENCE ON, IEEE, PISCATAWAY, NJ, USA, 28 septembre 2009 (2009-09-28), pages 1-8, XP031570296, ISBN: 978-1-4244-5019-0 cité dans la demande
- LUTZ GOLDMANN ET AL: "Towards Fully Automatic Image Segmentation Evaluation", ADVANCED CONCEPTS FOR INTELLIGENT VISION SYSTEMS; [LECTURE NOTES IN COMPUTER SCIENCE], SPRINGER BERLIN HEIDELBERG, BERLIN, HEIDELBERG, vol. 5259, 20 octobre 2008 (2008-10-20), pages 566-577, XP019108440, ISBN: 978-3-540-88457-6
- HUEI-FANG YANG ET AL: "Ground Truth Estimation by Maximizing Topological Agreements in Electron Microscopy Data", ADVANCES IN VISUAL COMPUTING, SPRINGER BERLIN HEIDELBERG, BERLIN, HEIDELBERG, vol. 6938, 26 septembre 2011 (2011-09-26), pages 371-380, XP019166033, ISBN: 978-3-642-24027-0
- ZHANG H ET AL: "Image segmentation evaluation: A survey of unsupervised methods", COMPUTER VISION AND IMAGE UNDERSTANDING, ACADEMIC PRESS, US, vol. 110, no. 2, 1 mai 2008 (2008-05-01), pages 260-280, XP022613231, ISSN: 1077-3142, DOI: 10.1016/J.CVIU.2007.08.003 [extrait le 2008-04-15]

## Description

La présente invention concerne un procédé de segmentation d'une image d'un oeil et un dispositif associé.

L'invention se situe plus généralement dans le domaine de la reconnaissance automatique d'iris, qui trouve de nombreuses applications dans des systèmes de reconnaissance biométrique.

De manière classique, une image d'un oeil d'un individu est capturée, et segmentée en un nombre prédéterminé de portions, correspondant aux zones connues de l'oeil qui sont respectivement la pupille, l'iris et une zone de fond, incluant le blanc de l'oeil, la peau, les cils et autres. Il a été constaté que c'est l'iris, de part son aspect texturé et caractéristique de l'individu, qui est utilisable pour l'identification. Une fois la segmentation appliquée, la zone correspondant à l'iris est extraite, et peut être utilisée par exemple pour comparaison avec des images d'iris d'une base de données. Dans certaines applications, des bases de données biométriques relatives à un très grand nombre d'individus sont utilisées. Il est important d'assurer un bon niveau de reconnaissance et un faible taux d'erreur. Une des conditions nécessaires pour assurer un bon niveau de reconnaissance est d'obtenir une segmentation fiable. En effet, une erreur de segmentation induit une erreur de caractérisation de la texture de l'iris, et par conséquent peut avoir un impact négatif sur les performances du système de reconnaissance.

On connaît dans l'état de la technique des méthodes d'évaluation de la qualité de segmentation, en particulier appliquées à la segmentation d'images d'oeil en vue de la reconnaissance d'iris. L'article « An automated method for predicting iris segmentation failures », de Kalka et al, publié dans « Proceedings of the 3rd IEEE International Conference on Biometrics: Theory, applications and systems », 2009, présente une méthode d'évaluation de la qualité de segmentation d'une image de l'oeil. Dans cet article il est proposé de labéliser les pixels de l'image de l'oeil traitée, chaque pixel ayant une valeur d'intensité associée, c'est-à-dire d'associer à chaque pixel un label ou identifiant relatif à une portion parmi la pupille, l'iris et le fond, des zones circulaires étant associées à la pupille et à l'iris. La labélisation se fait sur la base d'un calcul d'histogramme de l'image de l'oeil, dans lequel sont déterminés deux seuils afin de définir respectivement la région de la pupille et la région de l'iris, se basant sur l'heuristique selon laquelle les pixels appartenant à la pupille ont une valeur d'intensité associée plus basse que celle de l'iris.
Un masque de segmentation obtenu par segmentation d'une image d'un oeil est comparé au résultat de la labélisation afin d'obtenir un score reflétant la qualité de la segmentation. Cette méthode d'évaluation de segmentation ne donne pas de résultats suffisamment précis, une labélisation sur base d'histogramme et de modèles circulaires prédéfinis de la pupille et de l'iris étant imprécise.

Il est souhaitable d'améliorer les méthodes connues, en proposant une validation de segmentation d'une image de l'oeil qui soit plus robuste et plus fiable.

A cet effet, l'invention propose, selon un premier aspect, un procédé de segmentation d'une image d'un oeil, représentée par un ensemble de pixels, comportant une étape de segmentation fournissant un masque de segmentation comportant un nombre P prédéterminé de régions et une étape de validation dudit masque de segmentation obtenu, la validation comportant les étapes de :
- association à chaque pixel de l'image d'un identifiant de classification, le nombre N d'identifiants de classification étant strictement supérieur à P, par un procédé de classification non supervisée,
- détermination d'un masque de validation comportant P régions, comportant, pour au moins une région dudit masque de segmentation, une sélection d'au moins un identifiant de classification associé à une majorité de pixels de ladite région et une fusion de tous les pixels associés audit au moins un identifiant de classification sélectionné pour former une région correspondante du masque de validation, et
- évaluation du masque de segmentation en utilisant le masque de validation déterminé.

Avantageusement, le procédé selon l'invention permet d'obtenir dynamiquement un masque de validation ayant le même nombre de régions que le masque de segmentation sans connaissance a priori, ce qui permet une bonne fiabilité pour une grande variété d'images.

Le procédé de segmentation d'une image d'un oeil selon l'invention peut également présenter une ou plusieurs des caractéristiques ci-dessous, prises indépendamment ou en combinaison :
- le procédé de classification non supervisée met en oeuvre une représentation des pixels de l'image par une loi mélange de N de variables gaussiennes, chaque variable gaussienne ayant une moyenne et une variance déterminées itérativement ;
- le procédé de classification non supervisée met en oeuvre un algorithme de type Expectation Maximization ;
- une image d'un oeil est segmentée en trois régions, comprenant une région correspondant à l'iris et une région correspondant à la pupille ;
- le nombre N d'identifiants de classification est compris entre 8 et 16 ;
- l'étape de détermination d'un masque de validation comporte, pour au moins une région choisie dudit masque de segmentation, les sous-étapes suivantes :
- sélection de l'identifiant de classification parmi un ensemble d'identifiants de classification disponibles, tel qu'une majorité de pixels de ladite région choisie sont associés audit identifiant de classification
- ajout de tous les pixels associés audit identifiant de classification sélectionné à une région du masque de validation correspondant à ladite région choisie, et suppression dudit identifiant sélectionné de l'ensemble des identifiants disponibles,
- obtention d'un taux de recouvrement de ladite région choisie par des pixels de la région correspondante du masque de validation,
- si le taux de recouvrement obtenu est inférieur à un seuil prédéterminé, itération des étapes de sélection, ajout et obtention précédentes.

Selon un deuxième aspect, l'invention concerne un dispositif de segmentation d'une image d'un oeil, représentée par un ensemble de pixels, comportant un module de segmentation fournissant un masque de segmentation comportant un nombre P prédéterminé de régions et un module de validation dudit masque de segmentation obtenu. Le module de validation comporte :
- un module d'association à chaque pixel de l'image d'un identifiant de classification, le nombre N d'identifiants de classification étant strictement supérieur à P, par un procédé de classification non supervisée,
- un module de détermination d'un masque de validation comportant P régions, comportant, pour au moins une région dudit masque de segmentation, une sélection d'au moins un identifiant de classification associé à une majorité de pixels de ladite région et une fusion de tous les pixels associés audit au moins un identifiant de classification sélectionné pour former une région correspondante du masque de validation, et
- un module d'évaluation du masque de segmentation utilisant le masque de validation déterminé.

Selon une caractéristique particulière, le module de détermination d'un masque de validation comporte, pour au moins une région choisie dudit masque de segmentation :
- des moyens de sélection de l'identifiant de classification parmi un ensemble d'identifiants de classification disponibles, tel qu'une majorité de pixels de ladite région choisie sont associés audit identifiant de classification,
- des moyens d'ajout de tous les pixels associés audit identifiant de classification sélectionné à une région du masque de validation correspondant à ladite région choisie, et des moyens de suppression dudit identifiant sélectionné de l'ensemble des identifiants disponibles,
- des moyens d'obtention d'un taux de recouvrement de ladite région choisie par des pixels de la région correspondante du masque de validation, et
- des moyens de comparaison du taux de recouvrement obtenu à un seuil prédéterminé.

Selon un troisième aspect, l'invention concerne un système de traitement de données biométriques mettant en oeuvre au moins une image d'un oeil d'un individu, comportant un dispositif de segmentation d'une image d'un oeil tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma représentant les blocs fonctionnels d'un dispositif programmable apte à mettre en oeuvre l'invention ;
- la figure 2 est un schéma bloc des principaux modules fonctionnels d'un dispositifs selon l'invention ;
- la figure 3 est un ordinogramme d'un mode de réalisation d'un procédé de segmentation selon l'invention ;
- la figure 4 est un exemple schématique d'image à segmenter et de masque de segmentation obtenu ;
- les figures 5 et 6 sont des exemples de représentation d'une image par une pluralité de gaussiennes, et
- la figure 7 est ordinogramme d'un mode de réalisation d'une détermination de masque de validation selon l'invention.

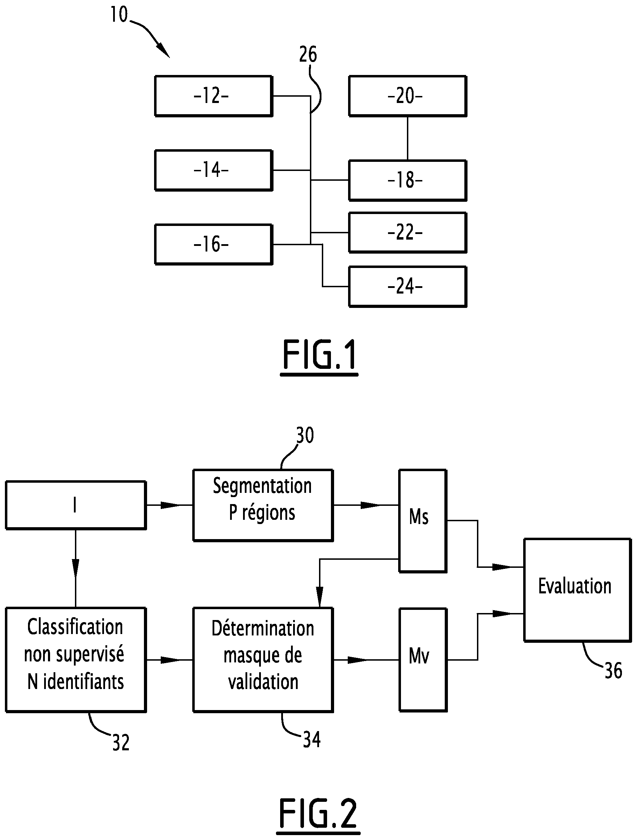

La figure 1 illustre les principaux modules d'un dispositif apte à mettre en oeuvre le procédé de segmentation d'une image d'un oeil selon l'invention.

Un dispositif 10 apte à mettre en oeuvre l'invention, typiquement un dispositif programmable de type ordinateur, comprend un écran 12, un module 14 de saisie des commandes d'un utilisateur, par exemple un clavier, optionnellement un moyen supplémentaire de pointage 16, tel une souris, permettant de sélectionner des éléments graphiques affichés sur l'écran 12, une unité centrale de traitement 18, ou processeur, apte à exécuter des instructions de programme de commande lorsque le dispositif 10 est mis sous tension. Le dispositif 10 comporte également un module de stockage d'informations 20, apte à stocker des instructions de code exécutable permettant la mise en oeuvre de programmes aptes à mettre en oeuvre le procédé selon l'invention. En outre, de manière optionnelle, le dispositif 10 comporte un module de communication 22, apte à envoyer assurer la communication du dispositif 10 avec des dispositifs serveurs connectés via un réseau de communication, par exemple Internet, selon un protocole de communication adapté. Le dispositif 10 comporte également un module de capture d'image 24, qui est exemple un capteur d'iris ou une caméra.

Les divers blocs fonctionnels du dispositif 10 décrits ci-dessus sont connectés via un bus de communication 26.

A titre d'exemple, dans un scénario d'utilisation, un système de traitement de données biométriques comportant un dispositif 10, est utilisé par un opérateur pour acquérir des données biométriques relatives à un individu et les stocker dans une base de données, qui est par exemple mémorisée dans un serveur central non représenté. Une capture d'image de l'oeil et une segmentation d'image d'iris est effectuée. Avantageusement, le procédé selon l'invention permet la validation de la segmentation effectuée. Dans le cas où la qualité de segmentation est jugée insuffisante et donc la segmentation n'est pas validée, l'opérateur du système est prévenu et effectue une nouvelle capture d'image de l'oeil, et une nouvelle segmentation et validation de segmentation, jusqu'à ce que la segmentation soit validée.

La figure 2 illustre un schéma bloc des principaux modules fonctionnels d'un dispositif 28 selon un mode de réalisation de l'invention. Une image numérique d'un oeil, notée I, est reçue en entrée. L'image I est constituée d'un ensemble de pixels, classiquement une matrice de pixels, chaque pixel ayant une valeur d'intensité associée, en général codée sur 8 bits et pouvant prendre une valeur entre 0 et 255.

L'image I est d'une part envoyée vers un module 30 de segmentation, qui est apte à segmenter l'image, selon une méthode adaptée, en P régions, typiquement P=3 régions correspondant respectivement à la pupille, à l'iris et au reste de l'image ou zone de fond. Le résultat de la segmentation est appelé masque de segmentation Ms et comprend donc trois régions distinctes. Toutes méthodes de segmentation, plus particulièrement utilisées pour la segmentation des images de l'oeil, comme par exemple la méthode décrite dans l'article « Iris segmentation using geodesic active contours », S. Shah et A. Ross, publié dans IEEE Transactions on Information Forensics and Security, Décembre 2009, est applicable.

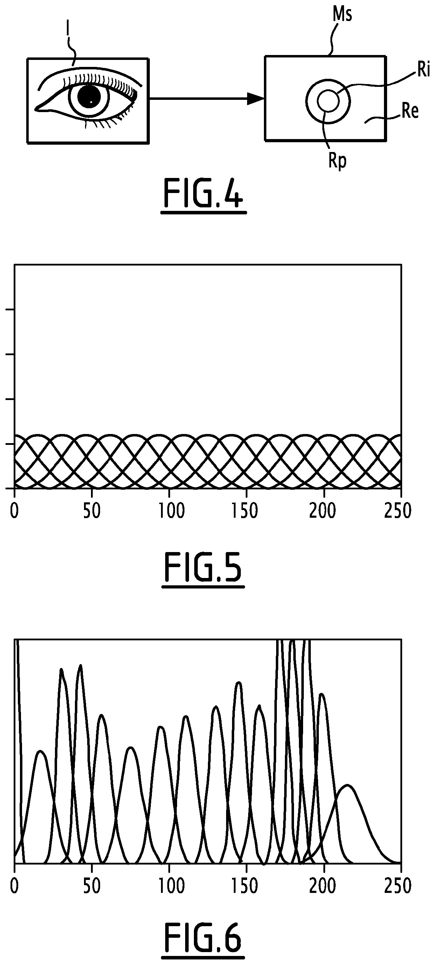

L'image I est également fournie à un module de classification non supervisée 32, qui permet d'obtenir une association à chaque pixel de l'image d'un identifiant parmi N identifiants, avec N strictement supérieur à P, et de préférence au moins égal au double de P. Un mode de réalisation particulier de la classification non supervisée sera décrit ci-après en référence aux figures 5 et 6.

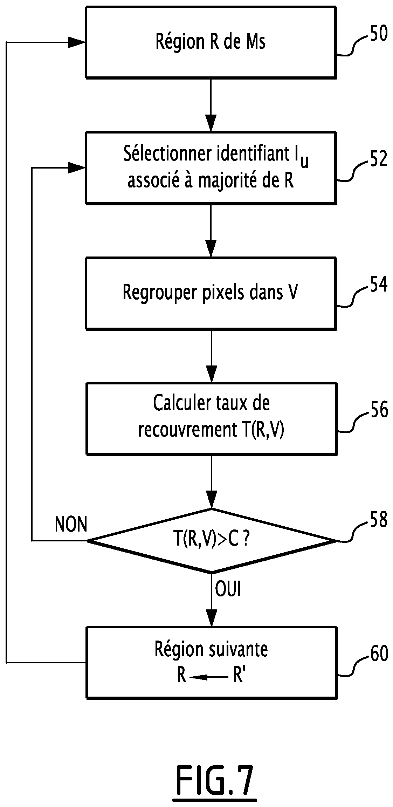

Ensuite, à partir des N identifiants de classification, le module 32 permet de déterminer un masque de validation, noté Mv, qui contient P régions, comme le masque de segmentation, et dans lequel les P régions sont obtenues à partir d'au moins une partie des N identifiants issus du module de classification 30. Un mode de réalisation de la détermination du masque de validation sera décrit en référence à la figure 7.

Les masques respectifs Ms et Mv sont ensuite fournis à un module d'évaluation 36, qui implémente un procédé d'évaluation des différences entre ces deux masques et qui permet de valider la segmentation obtenue par le module 30. Par exemple, un score de similarité entre les deux masques est calculé et comparé à un seuil prédéterminé. Toute méthode connue d'évaluation de ressemblance et de validation est applicable, notamment les méthodes décrites dans « A survey on evaluation methods for image segmentation » par Y. Zhang publié dans la revue « Pattern Recognition » en 1996.

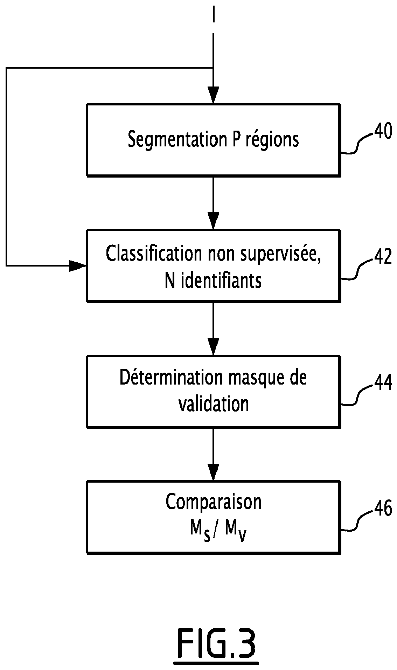

La figure 3 illustre les principales étapes mises en oeuvre dans un mode de réalisation d'un procédé de segmentation incluant une validation de la segmentation obtenue, selon un mode de réalisation de l'invention, typiquement mises en oeuvre par le processeur 18 d'un dispositif 10.

Lors d'une première étape 40, une image I reçue en entrée, qui est une image d'oeil, est segmentée en P régions comme décrit ci-dessus, et un masque de segmentation Ms est obtenu.

Ensuite, une étape de validation de la segmentation Ms est mise en oeuvre. L'étape de validation comporte une étape de classification non supervisée 42 qui réalise l'association de chaque pixel de l'image à un identifiant de classification parmi N identifiants de classification.

L'étape 42 est suivie d'une étape 44 de détermination de masque de validation Mv, à partir du masque de segmentation Ms et du résultat de l'étape de classification.

Ensuite une étape de comparaison des masques de segmentation Ms et de validation Mv obtenus est mise en oeuvre.

Les étapes 42 à 46 font partie de l'étape de validation du masque de segmentation.

Un exemple schématique d'image de l'oeil I et de masque de segmentation obtenu est montré à la figure 4. Sur l'image originale I on distingue des portions correspondant respectivement à la pupille, à l'iris et au fond de l'oeil, ainsi qu'aux cils et à la paupière.

Pour l'utilisation d'une image de l'oeil dans des applications biométriques, il est utile d'extraire une portion de l'image correspondant à l'iris, afin d'utiliser sa texture. Pour cela, le masque de segmentation Ms distingue une première région Rp correspondant à la pupille, une deuxième région Ri correspondant à l'iris et une région complémentaire Re, ou région de fond, correspondant aux autres parties de l'image de l'oeil qui ne sont pas directement exploitables dans le cadre de la reconnaissance d'iris.

Ainsi, le masque de segmentation comporte trois régions distinctes.

En alternative, un plus grand nombre de régions pourrait être distingué, par exemple incluant la région des cils dans l'image.

Dans un mode de réalisation particulièrement avantageux, le module de classification non supervisée 32 met en oeuvre une étape classification 42 des pixels de l'image I en utilisant une modélisation probabiliste des pixels de l'image par une loi mélange de N variables Gaussiennes, connu sous le nom de « Gaussian Mixture Model » (GMM). Ce modèle GMM est classiquement obtenu en utilisant un algorithme de type Expectation Maximization (EM). De manière connue, un algorithme de type EM est un algorithme itératif permettant d'estimer des paramètres de modèles statistiques non directement observables, les estimations étant faites selon le critère de maximum de vraisemblance ou de maximum a posteriori. Un tel procédé de classification est itératif, la loi mélange étant initialisée avec N variables gaussiennes de même moyenne et même variance, réparties régulièrement sur l'ensemble des valeurs d'intensité que peuvent prendre les pixels de l'image, comme illustré à la figure 5. Les moyennes et variances des différentes gaussiennes sont ensuite recalculées à chaque itération, en fonction de probabilités conditionnelles calculées à partir des valeurs effectives des intensités des pixels de l'image, comme illustré à la figure 6, qui montre l'évolution des gaussiennes après 9 itérations. Ainsi, les variables gaussiennes représentatives de l'image capturent des propriétés statistiques de l'image. De manière classique, un nombre d'itérations compris entre 5 et 15 est préconisé. A chaque pixel de l'image est associé un identifiant parmi les N identifiants possibles, qui est l'identifiant de la variable gaussienne ayant la contribution la plus grande dans la définition de ce pixel.

Dans un mode de réalisation, N=16. D'une manière générale, N varie de préférence entre 8 et 16, afin d'obtenir un bon compromis entre le temps de calcul et la pertinence du résultat de la classification.

En variante, d'autres procédés de classification non supervisée, notamment utilisant une modélisation probabiliste des valeurs d'intensité des pixels de l'image, sont utilisés. Par exemple la classification non supervisée est réalisée par un algorithme de type « k-means », connu pour générer une partition d'un ensemble d'observations en un nombre donné N de classes, dans lequel chaque observation est classifiée dans la classe ayant la moyenne la plus proche.

Selon une autre variante, la classification non supervisée est réalisée par une algorithme de type « mean-shift », par exemple selon la méthode décrite dans « Bayesian image Segmentation with mean shift » par Huiyu Zhou, Schaefer, Celebi et Minrui Fei publié dans Proc. of 16th IEEE International Conference on Image Processing (ICIP)» en 2009.

La figure 7 illustre les principales étapes mises en oeuvre dans un mode de réalisation de la détermination d'un masque de validation, typiquement mises en oeuvre par le processeur 18 d'un dispositif 10.

En entrée, le procédé reçoit le résultat de la classification non supervisée, et plus particulièrement l'association de chaque pixel de l'image d'un oeil à traiter à un identifiant de classification parmi N identifiants de classification. De plus, le procédé reçoit également le masque de segmentation Ms composé de P régions, avec P=3 dans le cas particulier considéré.

Une première région R du masque de segmentation Ms est sélectionnée à l'étape 50. Par exemple, la région représentative de la pupille Rp est sélectionnée.

Ensuite, à l'étape 52, l'ensemble des identifiants de classification disponibles, qui est l'ensemble des N identifiants utilisés pour commencer, est utilisé pour sélectionner l'identifiant lᵤ tel qu'une majorité de pixels de la région R a l'identifiant de classification lᵤ comme identifiant associé.

Après la sélection de lᵤ, tous les pixels associés à l'identifiant lᵤ sont associés à l'étape 54 à une région V du masque de validation Mv correspondant à la région R du masque de segmentation, et l'identifiant lᵤ sélectionné est supprimé de l'ensemble des identifiants disponibles.

Un taux de recouvrement T(R,V) de la région R par la région V est ensuite calculé à l'étape 56. Le taux de recouvrement est typiquement le pourcentage de pixels de R qui appartiennent également à la région V.

Il est ensuite vérifié à l'étape 58 si le taux de recouvrement T(R,V) est supérieur à un seuil C prédéterminé, qui est par exemple égal à 80%, mais qui est choisi plus généralement dans une plage allant de 70% à 95%.

Si le taux de recouvrement T(R,V) calculé est supérieur au seuil C, il est considéré que la région V du masque de validation correspondant à la région R a été suffisamment définie, et l'étape 58 est suivie d'une étape 60 de sélection de la région suivante R', qui est considérée comme région R à traiter (étape 50), s'il reste une telle région à traiter. Par exemple, la région Ri représentative de l'iris est sélectionnée après la région Rp.

Si le taux de recouvrement T(R,V) calculé est inférieur au seuil C, alors l'étape 56 est suivie de l'étape 52 déjà décrite, et un autre identifiant lᵤ, parmi l'ensemble des identifiants de classification disponibles, c'est-à-dire qui n'ont pas encore été sélectionnés, est choisi. La région V correspondant à la région R est agrandie de l'ensemble des pixels ayant comme identifiant de classification associé l'identifiant choisi à l'étape 52. Le taux de recouvrement T(R,V) est mis à jour, et comparé au seuil C.

Ainsi, une région V ayant un taux de recouvrement au moins égal au seuil C est formée.

Dans l'exemple de segmentation de l'image d'un oeil illustré à la figure 3, seules deux régions, les régions Rp et Ri, correspondant respectivement à la pupille et à l'iris sont traitées. Tous les identifiants de classification restant sont associés à la région complémentaire. Finalement, un masque de validation Mv est obtenu.

Le procédé précédemment décrit et illustré par la figure 7 assurera que Mv soit proche de Ms dans le cas ou Ms est de qualité recevable pour une exploitation biométrique, et que Mv soit très différent de Ms dans le cas ou Ms est de qualité insuffisante. Des méthodes classiques d'évaluation de qualité de segmentation peuvent ainsi être utilisées pour comparer Mv et Ms.

Avantageusement, l'invention permet de valider de manière plus fiable une segmentation d'une image d'oeil, par détermination d'un masque de validation indépendante de la méthode de segmentation utilisée. Ainsi, l'invention trouve une application dans tout système de traitement biométrique d'images de l'oeil.

## Revendications

1. Procédé de segmentation d'une image d'un oeil, représentée par un ensemble de pixels, comportant une étape de segmentation fournissant un masque de segmentation comportant un nombre P prédéterminé de régions et une étape de validation dudit masque de segmentation obtenu, **caractérisé en ce que** la validation comporte les étapes de :
- association (42) à chaque pixel de l'image d'un identifiant de classification, le nombre N d'identifiants de classification étant strictement supérieur à P, par un procédé de classification non supervisée,
- détermination (44) d'un masque de validation comportant P régions, comportant, pour au moins une région dudit masque de segmentation, une sélection d'au moins un identifiant de classification associé à une majorité de pixels de ladite région et une fusion de tous les pixels associés audit au moins un identifiant de classification sélectionné pour former une région correspondante du masque de validation, et
- évaluation (46) du masque de segmentation en utilisant le masque de validation déterminé.

2. Procédé de segmentation selon la revendication 1, **caractérisé en ce que** ledit procédé de classification non supervisée met en oeuvre une représentation des pixels de l'image par une loi mélange de N de variables gaussiennes, chaque variable gaussienne ayant une moyenne et une variance déterminées itérativement.

3. Procédé de segmentation selon la revendication 2, **caractérisé en ce que** ledit procédé de classification non supervisée met en oeuvre un algorithme de type Expectation Maximization.

4. Procédé de segmentation selon l'une des revendications 1 à 3, **caractérisé en ce qu'**une dite image d'un oeil est segmentée en trois régions, comprenant une région (Ri) correspondant à l'iris et une région (Rp) correspondant à la pupille.

5. Procédé de segmentation selon la revendication 4, **caractérisé en ce que** le nombre N d'identifiants de classification est compris entre 8 et 16.

6. Procédé selon l'une des revendications précédentes, **caractérisé en ce que** l'étape de détermination d'un masque de validation comporte, pour au moins une région (R) choisie dudit masque de segmentation, les sous-étapes suivantes :
- sélection (52) de l'identifiant de classification parmi un ensemble d'identifiants de classification disponibles, tel qu'une majorité de pixels de ladite région (R) choisie sont associés audit identifiant de classification,
- ajout (54) de tous les pixels associés audit identifiant de classification sélectionné à une région (V) du masque de validation correspondant à ladite région (R) choisie, et suppression dudit identifiant sélectionné de l'ensemble des identifiants disponibles,
- obtention (56) d'un taux de recouvrement de ladite région (R) choisie par des pixels de la région (V) correspondante du masque de validation,
- si le taux de recouvrement obtenu est inférieur à un seuil prédéterminé, itération des étapes de sélection, ajout et obtention précédentes.

7. Dispositif de segmentation d'une image d'un oeil, représentée par un ensemble de pixels, comportant un module de segmentation fournissant un masque de segmentation comportant un nombre P prédéterminé de régions et un module de validation dudit masque de segmentation obtenu, **caractérisé en ce que** le module de validation comporte :
- un module d'association (32) à chaque pixel de l'image d'un identifiant de classification, le nombre N d'identifiants de classification étant strictement supérieur à P, par un procédé de classification non supervisée,
- un module de détermination (34) d'un masque de validation comportant P régions, comportant, pour au moins une région (R) dudit masque de segmentation, une sélection d'au moins un identifiant de classification associé à une majorité de pixels de ladite région (R) et une fusion de tous les pixels associés audit au moins un identifiant de classification sélectionné pour former une région (V) correspondante du masque de validation, et
- un module d'évaluation (36) du masque de segmentation utilisant le masque de validation déterminé.

8. Dispositif de segmentation selon la revendication 7, **caractérisé en ce que** le module de détermination d'un masque de validation comporte, pour au moins une région (R) choisie dudit masque de segmentation :
- des moyens de sélection de l'identifiant de classification parmi un ensemble d'identifiants de classification disponibles, tel qu'une majorité de pixels de ladite région (R) choisie sont associés audit identifiant de classification,
- des moyens d'ajout de tous les pixels associés audit identifiant de classification sélectionné à une région (V) du masque de validation correspondant à ladite région (R) choisie, et des moyens de suppression dudit identifiant sélectionné de l'ensemble des identifiants disponibles,
- des moyens d'obtention d'un taux de recouvrement de ladite région (R) choisie par des pixels de la région (V) correspondante du masque de validation,
- des moyens de comparaison du taux de recouvrement obtenu à un seuil prédéterminé.

9. Système de traitement de données biométriques mettant en oeuvre au moins une image d'un oeil d'un individu, **caractérisé en ce qu'**il comporte un dispositif de segmentation d'une image d'un oeil selon l'une des revendications 7 à 8.

## Patentansprüche

1. Verfahren zur Segmentierung eines Bildes eines Auges, das durch eine Pixelanordnung repräsentiert wird, umfassend einen Schritt der Segmentierung, der eine Segmentierungsmaske liefert, die eine vorgegebene Anzahl P von Regionen aufweist, und einen Schritt der Validierung der erhaltenen Segmentierungsmaske, **dadurch gekennzeichnet, dass** die Validierung die Schritte aufweist:
- durch ein nicht überwachtes Klassifizierungsverfahren Zuordnen (42) eines Klassifizierungskennzeichens zu jedem Pixel des Bildes, wobei die Anzahl N von Identifizierungskennzeichen streng größer als P ist,
- Ermitteln (44) einer P Regionen aufweisenden Validierungsmaske, das für mindestens eine Region der Segmentierungsmaske eine Auswahl mindestens eines Klassifizierungskennzeichens, das einer Mehrheit der Pixel der Region zugeordnet ist, und eine Zusammenfassung aller Pixel, die dem mindestens einen ausgewählten Klassifizierungskennzeichen zugeordnet sind, aufweist, um eine korrespondierende Region der Validierungsmaske zu bilden, und
- Auswerten (46) der Segmentierungsmaske unter Verwendung der ermittelten Validierungsmaske.

2. Segmentierungsverfahren nach Anspruch 1, **dadurch gekennzeichnet, dass** das nicht überwachte Klassifizierungsverfahren eine Darstellung der Pixel des Bildes durch eine Mischverteilung von N Gaußschen Variablen durchführt, wobei jede Gaußsche Variable einen Mittelwert und eine Varianz aufweist, die iterativ ermittelt werden.

3. Segmentierungsverfahren nach Anspruch 2, **dadurch gekennzeichnet, dass** das nicht überwachte Klassifizierungsverfahren einen Expectation-Maximization-Algorithmus ausführt.

4. Segmentierungsverfahren nach einem der Ansprüche 1 bis 3, **dadurch gekennzeichnet, dass** ein bestimmtes Bild eines Auges in drei Regionen segmentiert wird, umfassend eine der Iris entsprechende Region (Ri) und eine der Pupille entsprechende Region (Rp).

5. Segmentierungsverfahren nach Anspruch 4, **dadurch gekennzeichnet, dass** die Anzahl N von Klassifizierungskennzeichen zwischen 8 und 16 liegt.

6. Segmentierungsverfahren nach einem der vorhergehenden Ansprüche, **dadurch gekennzeichnet, dass** der Schritt der Ermittlung einer Validierungsmaske für mindestens eine gewählte Region (R) der Segmentierungsmaske die folgenden Schritte aufweist:
- Auswählen (52) des Klassifizierungskennzeichens aus einer Gesamtheit von verfügbaren Klassifizierungskennzeichen derart, dass eine Mehrheit von Pixeln der ausgewählten Region (R) dem Klassifizierungskennzeichen zugeordnet wird,
- Hinzufügen (54) von allen Pixeln, die dem ausgewählten Klassifizierungskennzeichen zugeordnet werden, zu einer Region (V) der Validierungsmaske korrespondierend zu der ausgewählten Region (R) und Streichen des ausgewählten Kennzeichens aus der Gesamtheit der verfügbaren Kennzeichen,
- Erlangen (56) einer Bedeckungsrate der ausgewählten Region (R) durch die Pixel der korrespondierenden Region (V) der Validierungsmaske,
- wenn die erhaltene Bedeckungsrate kleiner als eine vorbestimmte Schwelle ist, Iteration der vorhergehenden Schritte des Auswählens, Hinzufügens und Erlangens.

7. Vorrichtung zur Segmentierung eines Bildes eines Auges, das durch eine Pixelanordnung repräsentiert ist, umfassend ein Segmentierungsmodul, das eine eine vorgegebene Anzahl P von Regionen aufweisende Segmentierungsmaske liefert, und ein Validierungsmodul der erhaltenen Segmentierungsmaske, **dadurch gekennzeichnet, dass** das Validierungsmoduls umfasst:
- ein Modul (32) der Zuordnung eines Klassifizierungskennzeichens zu jedem Pixel des Bildes durch ein nicht überwachtes Klassifizierungsverfahren, wobei die Anzahl N von Klassifizierungskennzeichen streng größer als P ist,
- ein Modul (34) des Ermittelns einer P Regionen aufweisenden Validierungsmaske, das das für mindestens eine Region der Segmentierungsmaske eine Auswahl mindestens eines Klassifizierungskennzeichens, das einer Mehrheit der Pixel der Region zugeordnet ist, und eine Zusammenfassung aller Pixel, die dem mindestens einen ausgewählten Klassifizierungskennzeichen zugeordnet sind, aufweist, um eine korrespondierende Region der Validierungsmaske zu bilden, und
- ein Modul (36) der Auswertung der Segmentierungsmaske unter Verwendung der ermittelten Validierungsmaske.

8. Segmentierungsvorrichtung nach Anspruch 7, **dadurch gekennzeichnet, dass** das Modul des Ermittelns einer Validierungsmaske für mindestens eine ausgewählte Region (R) der Segmentierungsmaske aufweist:
- Mittel zur Auswahl des Klassifizierungskennzeichens aus einer Gesamtheit von verfügbaren Klassifizierungskennzeichen derart, dass eine Mehrheit von Pixeln der ausgewählten Region (R) dem Klassifizierungskennzeichen zugeordnet wird,
- Mittel zum Hinzufügen aller Pixel, die dem ausgewählten Klassifizierungskennzeichen zugeordnet werden, zu einer Region (V) der Validierungsmaske, die der ausgewählten Region (R) entspricht, und Mittel zum Streichen des ausgewählten Kennzeichens aus der Gesamtheit von verfügbaren Kennzeichen,
- Mittel zum Erlangen einer Bedeckungsrate der ausgewählten Region (R) durch die Pixel der korrespondierenden Region (V) der Validierungsmaske,
- Mittel zum Vergleichen der erhaltenen Bedeckungsrate mit einer vorgegebenen Schwelle.

9. System zur Aufbereitung von biometrischen Daten, das mindestens ein Bild eines Auges eines Individuums umsetzt, **dadurch gekennzeichnet, dass** es eine Vorrichtung zur Segmentierung eines Bildes eines Auges nach einem der Ansprüche 7 bis 8 umfasst.

## Claims

1. Method for the segmentation of an image of an eye, represented by a set of pixels, comprising a segmentation step which provides a segmentation mask comprising a predetermined number P of regions, and a step of validation of said segmentation mask obtained, **characterised in that** the validation comprises the steps of:
- associating (42) a classification identifier with each pixel of the image, the number N of classification identifiers being strictly greater than P, by an unsupervised classification method,
- determining (44) a validation mask comprising P regions, comprising, for at least one region of said segmentation mask, selecting at least one classification identifier associated with a majority of pixels of said region and merging all the pixels associated with said at least one selected classification identifier to form a corresponding region of the validation mask, and
- evaluating (46) the segmentation mask using the determined validation mask.

2. Segmentation method according to claim 1, **characterised in that** said unsupervised classification method employs a representation of the pixels of the image by a mixture model of N Gaussian variables, each Gaussian variable having a mean and a variance determined iteratively.

3. Segmentation method according to claim 2, **characterised in that** said unsupervised classification method employs an algorithm of the expectation maximization type.

4. Segmentation method according to any one of claims 1 to 3, **characterised in that** a said image of an eye is segmented into three regions, including a region (Ri) corresponding to the iris and a region (Rp) corresponding to the pupil.

5. Segmentation method according to claim 4, **characterised in that** the number N of classification identifiers is between 8 and 16.

6. Method according to any one of the preceding claims, **characterised in that** the step of determining a validation mask comprises, for at least one chosen region (R) of said segmentation mask, the following sub-steps:
- selecting (52) the classification identifier from a set of available classification identifiers, such that a majority of pixels of said chosen region (R) are associated with said classification identifier,
- adding (54) all the pixels associated with said selected classification identifier to a region (V) of the validation mask corresponding to said chosen region (R), and removing said selected identifier from the set of available identifiers,
- obtaining (56) a rate of coverage of said chosen region (R) by pixels of the corresponding region (V) of the validation mask,
- if the rate of coverage obtained is below a predetermined threshold, iterating the preceding steps of selecting, adding and obtaining.

7. Device for the segmentation of an image of an eye, represented by a set of pixels, comprising a segmentation module which provides a segmentation mask comprising a predetermined number P of regions, and a validation module for said segmentation mask obtained, **characterised in that** the validation module comprises:
- an association module (32) for associating a classification identifier with each pixel of the image, the number N of classification identifiers being strictly greater than P, by an unsupervised classification method,
- a determination module (34) for determining a validation mask comprising P regions, comprising, for at least one region (R) of said segmentation mask, selecting at least one classification identifier associated with a majority of pixels of said region (R) and merging all the pixels associated with said at least one selected classification identifier to form a corresponding region (V) of the validation mask, and
- an evaluation module (36) for evaluating the segmentation mask using the determined validation mask.

8. Segmentation device according to claim 7, **characterised in that** the determination module for determining a validation mask comprises, for at least one chosen region (R) of said segmentation mask:
- means for selecting the classification identifier from a set of available classification identifiers, such that a majority of pixels of said chosen region (R) are associated with said classification identifier,
- means for adding all the pixels associated with said selected classification identifier to a region (V) of the validation mask corresponding to said chosen region (R), and means for removing said selected identifier from the set of available identifiers,
- means for obtaining a rate of coverage of said chosen region (R) by pixels of the corresponding region (V) of the validation mask,
- means for comparing the rate of coverage obtained with a predetermined threshold.

9. System for processing biometric data employing at least one image of an eye of an individual, **characterised in that** it comprises a device for the segmentation of an image of an eye according to either claim 7 or claim 8.
